# EUROPÄISCHE PATENTSCHRIFT

(11) **EP 0 414 108 B1**
(45) Veröffentlichungstag und Bekanntmachung des Hinweises auf die Patenterteilung: **14.12.1994**
(21) Anmeldenummer: 90115591.1
(22) Anmeldetag: 14.08.1990
(51) Int. Cl.: G06F 7/52

(54) **Kombiniertes Array für Multiplikation und Division**
Combined array for multiplication and division
Réseau de cellules combiné pour la multiplication et la division

(30) Priorität: 23.08.1989 DE 3927844
(43) Veröffentlichungstag der Anmeldung: 27.02.1991
(73) Patentinhaber: Siemens Nixdorf Informationssysteme Aktiengesellschaft, 33102 Paderborn (DE)
(72) Erfinder: Grasser, Günter, Dipl.-Ing., D-8255 Obertaufkirchen (DE)
(74) Vertreter: Fuchs, Franz-Josef, Dr.-Ing.

(56) Entgegenhaltungen:
- US-A- 4 441 158
- IEEE TRANSACTIONS ON CIRCUITS AND SYSTEMS. vol. CAS34, no. 3, März 1987, NEW YORK US Seiten 304 - 308; Kutsuwa et al.: "Configuration and evaluation of 2'scomplement multiplication-division arrays"
- IEEE TRANSACTIONS ON COMPUTERS. vol. C-28, no. 3, März 1979, NEW YORK US Seiten 215 - 224; Agrawal: "High-speed arithmetic arrays"
- PATENT ABSTRACTS OF JAPAN vol. 10, no. 177 (P-470)(2233) 21 Juni 1986,& JP-A-61 026137 (TOSHIRO KUTSUWA) 05 Februar 1986,

## Beschreibung

Die Erfindung betrifft ein Multiplizier/Dividier-Array mit in n Zeilen und m Spalten angeordneten Arrayzellen mit je einem Volladdierer und einem Multiplexer und n am Rand des Arrays angeordneten Randzellen.

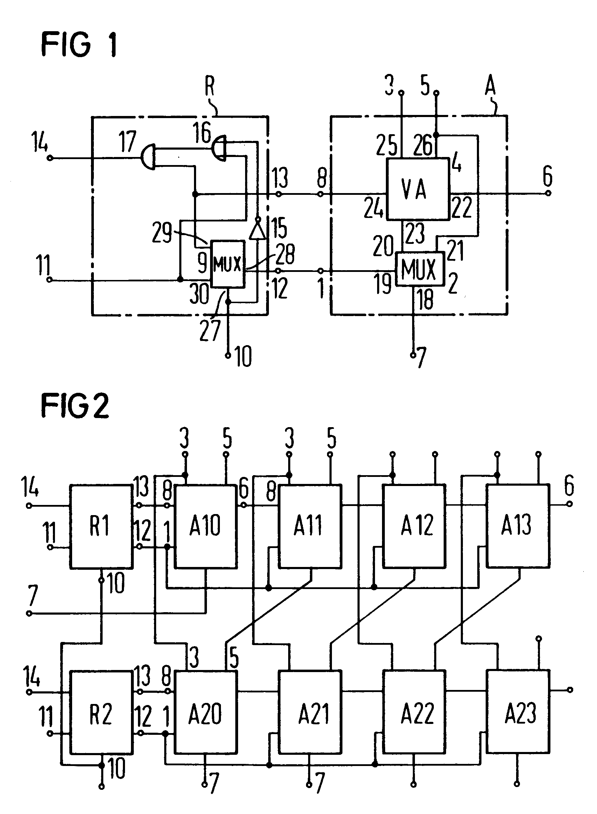

Ein solches Array ist z.B. in "IEEE Transactions on Computers Vol. C-28, No. 3 "[March 1979] auf Seite 215ff beschrieben. Ein solches Multiplizier/Dividier-Array besteht aus n x m Arrayzellen und n Randzellen, die vertikal am Rand des Array angeordnet sind. Fig. 2a auf Seite 217 zeigt eine Arrayzelle, deren schaltungstechnischer Aufwand relativ groß ist, da ein Multiplexer mit vier Eingängen, zwei Ausgängen und einem Steuereingang benötigt wird, der die Signale des aus zwei Halbaddierern bestehenden Volladdierers umschaltet.

Im Zuge der Miniaturisierung ist es erwünscht, den schaltungstechnischen Aufwand der Arrayzellen möglichst gering zu halten, da bei größeren Arrays Ae z.B. einem 16 x 16 Bit Multiplizier/Dividier-Array bereits 256 Arrayzellen notwendig sind, die schaltungstechnisch untereinander verknüpft werden müssen.

Aufgabe der Erfindung ist es, ein solches kombiniertes Multiplizier/Dividier-Array derart weiterzubilden, daß der schaltungstechnische Aufwand für die Arrayzellen möglichst gering und der damit verbundene Platzbedarf möglichst klein wird.

Diese Aufgabe wird gelöst durch die Merkmale des Anspruchs 1.

Die Erfindung wird anhand einer mit einer Randzelle verbundenen Arrayzelle in Verbindung mit FIG 1 und eines 2 x 4 Multiplizier/Dividier-Arrays in Verbindung mit FIG 2 erläutert.

FIG 1 zeigt eine mit einer Randzelle R verbundene Arrayzelle A. Die Randzelle R hat drei Eingänge 10, 11, 13 und zwei Ausgänge 12, 14. Die Arrayzelle A hat vier Eingänge 1, 3, 5, 6 und zwei Ausgänge 7, 8. Die Arrayzelle A besteht aus einem Volladdierer 4 und einem Multiplexer 2 mit zwei Eingängen 20, 21, einem Ausgang 18 und einem Steuereingang 19. Eingang 1 ist mit dem Steuereingang 19 des Multiplexers 2 verbunden. Eingang 3 ist mit dem ersten Summanden 25 des Volladdierers 4 und Eingang 5 mit dem zweiten Summanden 26 des Volladdierers 4 verbunden. Eingang 6 ist mit dem Überlaufeingang 22 des Volladdierers 4 verbunden. Der Summenausgang 23 des Volladdierers 4 ist mit dem ersten Eingang 20 des Multiplexers 2 verbunden. Der Überlaufausgang 24 des Volladdierers 4 ist mit dem Ausgang 8 verbunden. Der zweite Eingang 21 des Multiplexers 2 ist mit dem Eingang 5 verbunden. Der Ausgang 18 des Multiplexers 2 ist mit dem Ausgang 7 verbunden. Die Arrayzelle A ist über den Ausgang 8 mit dem Eingang 13 der Randzelle R 20, und über den Eingang 1 der Arrayzelle A mit dem Ausgang 12 der Randzelle R verbunden. Die Randzelle R besteht aus einer Logikschaltung 15, 16, 17 und einem Multiplexer 9. Diese Logikschaltung besteht z.B. aus einem Inverter 15, einem ODER-Gatter 16 und einem UND-Gatter 17, die derart verknüpft sind, daß der Eingang des Inverters 15 mit dem Eingang 10, daß der Ausgang des Inverters 15 mit dem ersten Eingang des ODER-Gatters 16 und daß der zweite Eingang des ODER-Gatters 16 mit dem Eingang 11 und daß der Ausgang des ODER-Gatters 16 mit dem ersten Eingang des UND-Gatters 17 und daß der zweite Eingang des UND-Gatters 17 mit dem Eingang 13 und daß der Ausgang des UND-Gatters 17 mit dem Ausgang 14 verbunden ist. Eingang 10 der Randzelle R ist mit dem Steuereingang 27 des Multiplexers 9 verbunden. Eingang 11 ist mit dem ersten Eingang des Multiplexers 9 verbunden. Der zweite Eingang 29 des Multiplexers 9 ist mit dem Eingang 13 verbunden. Der Ausgang 28 des Multiplexers ist mit dem Ausgang 12 verbunden.

Die Logikschaltung der Randzelle verknüpft die Eingangssignale derart, daß bei einem logischen Signal "0" am Eingang 10 das am Eingang 13 anliegende logische Signal am Ausgang 14 anliegt. Bei einem logischen Signal "1" am Eingang 10 liegt bei einem logischen Signal "0" am Eingang 11 ein logisches Signal "0" am Ausgang 14 an oder bei einem logischen Signal "1" am Eingang 11 das am Eingang 13 anliegende Signal am Ausgang 14 an.

Das logische Signal "1" am Eingang 10 der Randzelle R wählt als Operation die Multiplikation aus. Dadurch schaltet der Multiplexer 9 den am Eingang 11 anliegenden Multiplikator über den Ausgang 12 und über den Eingang 1 an den Steuereingang 19 des Multiplexers 2 der Arrayzelle A durch. Ist der Multiplikator logisch "0" so steuert der Multiplexer 2 der Arrayzelle A das am Eingang 5 anliegende logische Signal auf den Ausgang 7 der Arrayzelle A und die Logikschaltung 15, 16, 17 legt eine logische "0" an den Ausgang 14 der Randzelle. Ist der Multiplikator logisch "1", so schaltet der Multiplexer 2 der Arrayzelle A die Summe aus den an den Eingängen 3, 5, 6 anliegenden logischen Signale auf den Ausgang 7 der Arrayzelle A und der am Ausgang 8 der Arrayzelle A anliegende Übertrag wird über den Eingang 13 der Randzelle R und die Logikschaltung 15, 16, 17 auf den Ausgang 14 der Randzelle R geschaltet.

Für eine Divisionsoperation muß am Eingang 10 das logische Signal "0" anliegen. In diesem Fall wird durch die Logikschaltung 15, 16, 17 der am Eingang 13 der Randzelle R anliegende Übertrag auf den Ausgang 14 der Randzelle R geschaltet. Außerdem wird der am Eingang 13 der Randzelle R anliegende Übertrag durch den Multiplexer 9 über Ausgang 12 der Randzelle R auf den Eingang 1 der Arrayzelle A geschaltet. In Abhängigkeit vom logischen Zustand dieses Übertrags wird der Multiplexer 2 der Arrayzelle gesteuert. Ist der Übertrag logisch "0", so wird das am Eingang 5 anliegende Signal auf den Ausgang 7 der Arrayzelle A geschaltet. Ist der Übertrag logisch "1", so wird die Summe aus den an den Eingängen 3, 5 und 6 anliegenden logischen Signalen auf den Ausgang 7 der Arrayzelle A geschaltet.

FIG 2 zeigt die Realisierung eines 2 x 4 Bit Multiplizier/Dividier-Arrays. In jeder Zeile sind die Überlaufeingänge 6 der linken drei Volladdierer der Arrayzellen A10, A11, A12; A20, A21, A22 mit den Überlaufausgängen 8 der jeweils rechts benachbarten Arrayzelle A11, A12, A13; A 21, A22, A23 verbunden. An den ersten Summandeneingängen 3 der Volladdierer der Arrayzellen A10, A11, A12, A13 liegt der Multiplikand bzw. das Zweierkomplement des Divisors an.

Das Zweierkomplement kann z.B. durch das Vorschalten jeweils eines Inverters vor die Eingänge 3 der Arrayzellen A10, A11, A12, A13 der obersten Zeile und das Anlegen einer logischen "1" an den Überlaufeingang 6 der am rechten Rande liegenden Arrayzellen A13, A23 erreicht werden. Das hochwertige Bit des Dividenden wird an den Eingang 5 der am rechten oberen Rand des Arrays liegenden Arrayzelle A13 angelegt. Das niederwertige Bit des Dividenden wird an den Eingang 5 der am rechten unteren Rand des Arrays liegenden Arrayzelle A 23 angelegt. Der Multiplikator liegt an den Eingängen 11 der Randzellen R1, R2 an. Die drei Ausgänge 7 der rechtsliegenden drei Arrayzellen A11, A12, A13 der oberen Zeile des Arrays werden jeweils mit den drei Eingängen 5 der linksliegenden drei Arrayzellen A20, A21, A22 der unteren Arrayzeile verbunden. Die Eingänge 1 der Arrayzellen A einer jeden Zeile sind miteinander verbunden. Die Eingänge 10 der Randzellen R sind miteinander verbunden.

Die Funktion der Rand- und Arrayzellen entspricht der in FIG 1 beschriebenen. Bei einer Multiplikation liegt an den Eingängen 5 der Arrayzellen A10, A11, A12, A13, A23 und an den Eingängen 6 der Arrayzellen A13, A23 eine logische "0" an. Bei einer Division liegt an den Eingängen 5 der Arrayzellen A10, A11, A12 eine logische logische "0" an. Die niederwertigen vier Bits des Ergebnisses liegen an den Ausgängen 7 der unteren vier Arrayzeilen A20, A21, A22, A23. Die höherwertigen zwei Bits des Ergebnisses müssen noch durch zwei Abschlußadditionen gebildet werden. Die erste Summe wird aus den am Ausgang 14 der unteren Randzelle R2 und am Ausgang 7 der oberen linken Arrayzelle A10 anliegenden logischen Signale gebildet. Die zweite Summe wird aus dem Übertrag der ersten Abschlußaddition und dem am Ausgang 14 oberen Randzelle R anliegenden logischen Signal gebildet. Das Ergebnis der Division liegt an den Ausgängen 14 der oberen und unteren Randzellen R1, R2 an. Der Rest der Division liegt an den Ausgängen 7 der unteren Arrayzellen A20, A21, A22, A23 an.

Das Array kann in bekannter Weise zu einem n x m großen Array kaskadiert werden, wobei n x m Arrayzellen und n Randzellen nötig sind.

Um eine möglichst schnelle Multiplikation bzw. Division zu erreichen, ist es vorteilhaft, Volladdierer mit Carry-Look-Ahead-Schaltung in den Arrayzellen A zu verwenden.

## Patentansprüche

1. Multiplizier/Dividier-Array mit in n Zeilen und m Spalten angeordneten Arrayzellen (A) mit je einem Volladdierer (4) und einem Multiplexer (2), mit n am Rand des Arrays angeordneten Randzellen (R), **dadurch gekennzeichnet**, daß
- der Multiplexer (2) der Arrayzelle (A) zwei Eingänge (20, 21), einen Ausgang (18) und einen Steuereingang (19) aufweist, daß jede
- Arrayzelle (A)
a) mit einem ersten Eingang (1) versehen ist, der mit dem Steuereingang (19) des Multiplexers (2) verbunden ist,
b) mit einem zweiten Eingang (3) versehen ist, der mit dem ersten Summandeneingang (25) des Volladdierers (4) verbunden ist,
c) mit einem dritten Eingang (5) versehen ist, der mit dem zweiten Summandeneingang (26) des Volladdierers (4) und mit dem ersten Eingang (21) des Multiplexers (2) verbunden ist,
d) mit einem vierten Eingang (6) versehen ist, der mit dem Überlaufeingang (22) des Volladdierers (4) verbunden ist,
e) mit einem ersten Ausgang (7) versehen ist, der mit dem Ausgang (18) des Multiplexers (2) verbunden ist,
f) mit einem zweiten Ausgang (8) versehen ist, der mit dem Überlaufausgang (24) des Volladdierers (4) verbunden ist, daß
- der Summenausgang (23) des Volladdierers (4) mit dem zweiten Eingang (20) des Multiplexers (2) verbunden ist, daß
- jede Randzelle (R)
g) aus einer Logikschaltung (15, 16, 17) und aus einem Multiplexer (9) mit zwei Eingängen (29, 30), einem Ausgang (28) und einem Steuereingang (27) besteht,
h) mit einem Steuereingang (10) versehen ist, der mit dem Steuereingang (27) des Multiplexers (9) verbunden ist,
i) mit einem ersten Eingang (11) versehen ist, der mit dem ersten Eingang (30) des Multiplexers (9) verbunden ist,
k) mit einem ersten Ausgang (12) versehen ist, der mit dem Ausgang (28) des Multiplexers (9) verbunden ist,
l) mit einem zweiten Eingang (13) versehen ist, der mit dem zweiten Eingang (29) des Multiplexers (9) verbunden ist,
m) mit einem Ausgang (14) versehen ist, der mit dem Ausgang der Logikschaltung (15, 16, 17) verbunden ist, daß
- der zweite Ausgang (8) der höchstwertigen Arrayzelle (A) einer Zeile (n) mit dem zweiten Eingang (13) der Randzelle (R) verbunden ist, daß
- der erste Eingang (1) der Arrayzellen (A) einer Zeile (n) mit dem ersten Ausgang (12) der Randzelle (R) verbunden ist, daß
- die Logikschaltung der Randzelle (R) die Signale, die an den beiden Eingängen (11, 13) und am Steuereingang (10) der Randzelle anliegen, derart verknüpft, daß bei einem logischen Signal "0" am Steuereingang (10) das am zweiten Eingang (13) anliegende logische Signal am Ausgang (14) der Randzelle anliegt und daß bei einem logischen Signal "1" am Steuereingang (10) entweder bei einem logischen Signal "0" am ersten Eingang (11) eine logische "0" am Ausgang (14) der Randzelle (R) oder bei einem logischen Signal "1" am ersten Eingang (11) das am zweiten Eingang (13) anliegende logische Signal am Ausgang (14) der Randzelle anliegt.

2. Multiplizier/Dividier-Array nach Anspruch 1, **dadurch gekennzeichnet**, daß die Logikschaltung der Randzelle (R) durch ein ODER-Gatter (16), ein UND-Gatter (17) und einen Inverter (15) derart gebildet wird, daß der Eingang des Inverters (15) mit dem Steuereingang (10) der Randzelle (R), der Ausgang des Inverters (15) mit dem ersten Eingang des ODER-Gatters (16), der zweite Eingang des ODER-Gatters (16) mit dem ersten Eingang (11) der Randzelle (R), der Ausgang des ODER-Gatters (16) mit dem ersten Eingang des UND-Gatters (17), der zweite Eingang des UND-Gatters (17) mit dem zweiten Eingang (13) der Randzelle (R) und der Ausgang des UND-Gatters (17) mit dem Ausgang (14) der Randzelle (R) verbunden ist.

## Claims

1. Multiplier/divider array having array cells (A) which are arranged in n rows and m columns and each have a full adder (4) and a multiplexer (2), and having n edge cells (R) arranged at the edge of the array, characterized in that
- the multiplexer (2) of the array cell (A) has two inputs (20, 21), one output (18) and one control input (19), in that each
- array cell (A)
(a) is provided with a first input (1) which is connected to the control input (19) of the multiplexer (2),
(b) is provided with a second input (3) which is connected to the first summand input (2 of the full adder) (4),
(c) is provided with a third input (5) which is connected to the second summand input (26) of the full adder (4) and to the first input (21) of the multiplexer (2),
(d) is provided with a fourth input (6) which is connected to the overflow input (22) of the full adder (4),
(e) is provided with a first output (7) which is connected to the output (18) of the multiplexer (2), and
(f) is provided with a second output (8) which is connected to the overflow output (24) of the full adder (4), in that
- the sum output (23) of the full adder (4) is connected to the second input (20) of the multiplexer (2), in that
- each edge cell (R)
(g) comprises a logic circuit (15, 16, 17) and a multiplexer (9) having two inputs (29, 30), one output (28) and one control input (27),
(h) is provided with a control input (10) which is connected to the control input (27) of the multiplexer (9),
(i) is provided with a first input (11) which is connected to the first input (30) of the multiplexer (9),
(k) is provided with a first output (12) which is connected to the output (28) of the multiplexer (9),
(l) is provided with a second input (13) which is connected to the second input (29) of the multiplexer (9),
(m) is provided with an output (14) which is connected to the output of the logic circuit (15, 16, 17), in that
- the second output (8) of the highest value array cell (A) of a row (n) is connected to the second input (13) of the edge cell (R), in that
- the first input (1) of the array cells (A) of a row (n) is connected to the first output (12) of the edge cell (R), and in that
- the logic circuit of the edge cell (R) logically combines the signals present at the two inputs (11, 13) and at the control input (10) of the edge cell in such a way that given a logic signal "0" at the control input (10) the logic signal present at the second input (13) is present at the output (14) of the edge cell, and that given a logic signal "1" at the control input (10) either a logical "0" is present at the output (14) of the edge cell (R) given a logic signal "0" at the first input (11), or the logic signal present at the second input (13) is present at the output (14) of the edge cell given a logic signal "1" at the first input (11).

2. Multiplier/divider array according to Claim 1, characterized in that the logic circuit of the edge cell (R) is formed by an OR gate (16), an AND gate (17) and an invertor (15) in such a way that the input of the invertor (15) is connected to the control input (10) of the edge cell (R), the output of the invertor (15) is connected to the first input of the OR gate (16), the second input of the OR gate (16) is connected to the first input (11) of the edge cell (R), the output of the OR gate (16) is connected to the first input of the AND gate (17), the second input of the AND gate (17) is connected to the second input (13) of the edge cell (R), and the output of the AND gate (17) is connected to the output (14) of the edge cell (R).

## Revendications

1. Matrice de multiplication/division comportant des cellules (A) de matrice disposées suivant n lignes et m colonnes qui ont chacune un additionneur complet (4) et un multiplexeur (2), et comportant n cellules marginales (R) disposées sur le bord de la matrice, caractérisé par le fait que
- le multiplexeur (2) de la cellule (A) du réseau comporte deux entrées (20,21), une sortie (18) et une entrée de commande (19),
- chaque cellule (A) de matrice
a) est munie d'une première entrée (1), qui est reliée à l'entrée de commande (19) du multiplexeur (2),
b) est munie d'une seconde entrée (3), qui est reliée à la première entrée (25) d'un nombre à additionner de l'additionneur complet (4),
c) est munie d'une troisième entrée (5), qui est reliée à la seconde entrée (26) d'un nombre à additionner de l'additionneur complet (4) et à la première entrée (21) du multiplexeur (2),
d) est munie d'une quatrième entrée (6), qui est reliée à l'entrée (22) de report de l'additionneur complet (4),
e) est munie d'une première sortie (7), qui est reliée à la sortie (18) du multiplexeur (2),
f) est munie d'une seconde sortie (8), qui est reliée à la sortie de report (24) de l'additionneur complet (4),
- la sortie de somme (23) de l'additionneur complet (4) est reliée à la seconde entrée (20) du multiplexeur (2),
- chaque cellule marginale (R)
g) est constituée par un circuit logique (15,16,17) et par un multiplicateur (9) comportant deux entrées (29,30), une sortie (28) et une entrée de commande (27), et
h) est munie d'une entrée de commande (10), qui est reliée à l'entrée de commande (27) du multiplexeur (9),
i) est munie d'une première entrée (11), qui est reliée à la première entrée (30) du multiplexeur (9),
k) est munie d'une première sortie (12), qui est reliée à la sortie (28) du multiplexeur (9),
l) est munie d'une seconde entrée (13), qui est reliée à la seconde entrée (29) du multiplexeur (9),
m) est munie d'une sortie (14), qui est reliée à la sortie du circuit logique (15,16,17),
- la seconde sortie (8) de la cellule (A) de matrice de poids le plus fort d'une ligne (n) est reliée à la seconde entrée (13) de la cellule marginale (R),
- la première entrée (1) des cellules (A) de matrice d'une ligne (n) est reliée à la première sortie (12) de la cellule marginale (R),
- le circuit logique de la cellule marginale (R) combine les signaux, qui sont appliqués aux deux entrées (11,13) et à l'entrée de commande (10) de la cellule marginale, de telle sorte que dans le cas où un signal logique "0" est appliqué à l'entrée de commande (10), le signal logique appliqué à la seconde entrée (13) est fourni sur la sortie (14) de la cellule marginale et que, dans le cas où un signal logique "1" est appliqué à l'entrée de commande (10), soit un "0" logique est fourni sur la sortie (14) de la cellule marginale (R), dans le cas où un signal "0" logique est présent à la première entrée (11), soit le signal logique appliqué à la seconde entrée (13) est fourni sur la sortie (14) de la cellule marginale, dans le cas où un signal "1" logique est appliqué à la première entrée (11).

2. Matrice de multiplication/division suivant la revendication 1, caractérisé par le fait que le circuit logique de la cellule marginale (R) est formé par une porte OU (16), une porte ET (17) et un inverseur (15) de telle sorte que l'entrée de l'inverseur (15) est reliée à l'entrée de commande (10) de la cellule marginale (R), que la sortie de l'inverseur (15) est reliée à la première entrée de la porte OU (16), que la seconde entrée de la porte OU (16) est reliée à la première entrée (11) de la cellule marginale (R), que la sortie de la porte OU (16) est reliée à la première entrée de la porte ET (17), que la seconde entrée de la porte ET (17) est reliée à la seconde entrée (13) de la cellule marginale (R) et que la sortie de la porte ET (17) est reliée à la sortie (14) de la cellule marginale (R).
